# EUROPEAN PATENT APPLICATION

(11) **EP 4 817 791 A1**
(43) Date of publication of application: **07.10.2026**
(21) Application number: 24897692.0
(22) Date of filing: 29.11.2024
(51) Int. Cl.: B23Q 17/20, B23B 29/03

(54) **DIMENSION MEASUREMENT DEVICE, CUTTING TOOL SYSTEM, AND DIMENSION MEASUREMENT METHOD**

(30) Priority: 01.12.2023 JP 2023204247
(71) Applicant: Mitsubishi Materials Corporation, Tokyo 100-8117 (JP)
(72) Inventor: ABE, Taro, Tokyo 100-8117 (JP); TAKAHASHI, Wataru, Tokyo 100-8117 (JP)
(74) Representative: Hoffmann Eitle
(86) International application number: PCT/JP2024/042317
(87) International publication number: WO 2025/116008

(57) **Abstract**

The dimension measurement device includes: a sensor (3) and a measurement device main body (100) wherein the sensor (3) includes: a first distance sensor (31) that is an eddy current distance sensor; and a signal conversion part (35A, 35B) configured to output detected values based on an output signal of the distance sensor for each predetermined time interval, and wherein the measurement device main body (100) includes: a detection control part (101) configured to cause the sensor (3) to detect a distance to the workpiece while rotating the workpiece around the central axis; an acquisition part (103) configured to acquire a plurality of detected values output from the sensor (3) for each predetermined time interval within a predetermined time period; a calculation part (105) that calculates an average value of the plurality of detected values acquired by the acquisition part (103); and a result output part (107) configured to output a measurement result of the workpiece based on the average value of the detected values calculated by the calculation part (105).

## Description

### TECHNICAL FIELD

The present invention relates to a dimension measurement device, a cutting tool system, and a dimension measuring method.

This application claims priority based on Japanese Patent Application No. 2023-204247, filed on December 1, 2023, the contents of which are incorporated herein by reference.

### BACKGROUND ART

In recent years, development of cutting tools with various functions has been progressing. Patent Document 1 discloses a cutting tool equipped with a distance sensor. By incorporating a distance sensor in the cutting tool, it is possible to measure the dimensions of a workpiece immediately after machining, thereby shortening the time required for measurement and enabling efficient production.

### CITATION LISTS

### PATENT DOCUMENTS

[Patent Document 1] Japanese Patent Application Publication No. 2022-151686 (A)

### SUMMARY OF THE INVENTION

### TECHNICAL PROBLEM

In the cutting tools described above, an eddy current sensor is used as a distance sensor. When measuring the dimensions of a workpiece using an eddy current sensor, measurement errors can occur due to a phenomenon known as electrical runout. The electrical runout phenomenon is thought to be caused by residual magnetism and uneven crystal structure in the steel that forms the workpiece. Due to this electrical runout phenomenon, when measuring the diameter of a workpiece after machining, the diameter measured by the eddy current sensor can vary depending on the circumferential position around the central axis of the workpiece.

In response to this problem, it is conceivable to measure the diameter of a workpiece by measuring the diameter of the workpiece at multiple positions around the circumference using an eddy current sensor and calculating the average of the measured values at the multiple positions. However, measuring the diameter of a workpiece at multiple positions around the circumference is time-consuming and labor-intensive. Therefore, it is desirable to measure the diameter of a workpiece efficiently and with high accuracy.

In view of the above circumstances, one of the objects of the present invention is to provide a dimension measurement device, a cutting tool system, and a dimension measuring method that can measure the dimensions of a workpiece efficiently and with high accuracy.

### SOLUTION TO PROBLEM

One aspect of the dimension measurement device of the present invention is a dimension measurement device configured to measure a dimension in one direction of a workpiece machined by rotating the workpiece relative to a cutting tool about a central axis, the dimension measurement device comprising: a sensor for detecting a distance to a machined surface of the workpiece in the one direction; and a measurement device main body configured to measure the dimension of the workpiece in the one direction based on the distance detected by the sensor, wherein the sensor comprises: an eddy current distance sensor; and a signal conversion part configured to output detected values based on an output signal of the distance sensor for each predetermined time interval, and wherein the measurement device main body comprises: a detection control part configured to cause the sensor to detect a distance to the workpiece while rotating the workpiece around the central axis; an acquisition part configured to acquire a plurality of detected values output from the sensor for each predetermined time interval within a predetermined time period; a calculation part that calculates an average value of the plurality of detected values acquired by the acquisition part; and a result output part configured to output a measurement result of the workpiece based on the average value of the detected values calculated by the calculation part.

According to one aspect of the dimension measurement device of the present invention, a distance to a workpiece is detected by an eddy current distance sensor while rotating the workpiece. A sensor outputs a detection value based on an output signal of the distance sensor for each predetermined time interval. A measurement device main body calculates, within a predetermined time period, an average value of a plurality of detection values output from the sensor for each predetermined time interval, and obtains a measurement result of the workpiece based on the calculated average value. In this manner, by acquiring a plurality of averaged detection values from the sensor while rotating the workpiece, and further obtaining an average value of the acquired plurality of detection values, it is possible to efficiently perform dimensional measurement in one direction of the workpiece while suppressing the influence of an electrical runout phenomenon. As a result, dimensional measurement in one direction of the workpiece can be performed efficiently and with high accuracy while rotating the workpiece.

In the above dimension measurement device, the signal conversion part may be configured to output an average value of the output signal of the distance sensor over each predetermined time interval.

In this case, by using a signal converter configured to output the average value of the output signal as the detected value, the analog output of the distance sensor can be averaged with higher accuracy. In addition, the following description of the embodiment will be given with reference to the case where this type of signal converter is used.

In the above-mentioned dimension measurement device, the detection control part may rotate the workpiece at a predetermined rotational speed of 150 min⁻¹ or more and 1500 min⁻¹ or less.

In this case, by measuring the dimensions of the workpiece in one direction while rotating the workpiece at a predetermined rotational speed of 150 min⁻¹ or more and 1500 min⁻¹ or less, the number of detected values to be used for calculating the average value can be increased in a short time. Therefore, the dimension measurement of the workpiece in one direction can be performed more efficiently and with higher accuracy.

**In** the dimension measurement device, the acquisition part may be configured to acquire the detected values while rotating the workpiece five or more revolutions within the predetermined time period.

**In** this case, since the detected values are acquired while rotating the workpiece five or more revolutions within the predetermined time, the number of detected values to be used for calculating the average value can be increased, thereby enabling the dimensional measurement of the workpiece in one direction to be performed with higher accuracy.

One aspect of the cutting tool system of the present invention is a cutting tool system including:
the cutting tool including a tool main body extending along a cutting tool axis and having a mounting seat at a distal end thereof, and a cutting insert removably attached to the mounting seat; and
one of the above-described dimension measurement device.

According to one aspect of the cutting tool system of the present invention, the dimension measurement device acquires multiple averaged detected values from the sensor while rotating the workpiece, and then obtains the average value of the multiple acquired detected values, thereby efficiently measuring the dimension of the workpiece machined with the cutting tool in one direction while suppressing the effects of electrical runout. As a result, the dimension of the workpiece in one direction can be measured efficiently and with high accuracy while rotating the workpiece.

In the cutting tool system, the sensor may be attached to the cutting tool.

In this case, since the sensor is attached to the cutting tool, the sensor attached to the cutting tool can efficiently measure the dimensions in one direction of the workpiece machined by the cutting tool.

One aspect of the dimensional measurement method of the present invention is a dimension measuring method for measuring a dimension in one direction of a workpiece machined by rotating the workpiece relative to a cutting tool about a central axis, the method including: detecting a distance to the workpiece with an eddy current distance sensor while rotating the workpiece around the central axis, and outputting, as a detected value, an average value of the output signal of the distance sensor over each predetermined time interval; acquiring a plurality of the detected values output for each predetermined time interval within a predetermined time period; calculating an average value of the acquired plurality of detected values; and outputting a measurement result of the workpiece based on the calculated average value of the detected values.

According to one aspect of the dimension measurement method of the present invention, by obtaining multiple detected values, which are average values of the outputs of the distance sensors, while rotating the workpiece, and then averaging the multiple detected values, it is possible to efficiently measure the dimension of the workpiece in one direction while suppressing the influence of the electrical runout phenomenon. As a result, it is possible to efficiently and accurately measure the dimension of the workpiece in one direction while rotating the workpiece.

### ADVANTAGEOUS EFFECTS OF INVENTION

According to one aspect of the dimension measurement device, cutting tool system, and dimension measuring method of the present invention, dimensional measurements of a workpiece in one direction can be performed efficiently and with high accuracy.

### BRIEF EXPLANATION OF THE DRAWINGS

Figure 1 is a diagram illustrating a cutting tool system according to one embodiment of the present invention.
Figure 2 is a functional block diagram of a measurement device main body that constitutes the dimension measurement device of one embodiment of the present invention.
Figure 3 is a flowchart showing the flow of a dimension measuring method according to an embodiment of the present invention.
Figure 4A illustrates machining steps of one embodiment of the present invention.
Figure 4B illustrates machining steps of one embodiment of the present invention.
Figure 5 is a diagram showing a state in which distance detection in the radial direction of the workpiece is being performed in a distance detection step according to an embodiment of the present invention.
Figure 6 is a diagram showing variations in the detected distance to the machined surface of a workpiece in the radial direction due to the electrical runout phenomenon.
Figure 7 is a diagram showing variations in the detected distance to the machined surface of the workpiece in the radial direction when the rotation speed of the workpiece is changed.
Figure 8 is a diagram showing average values of detected values up to the machined surface of the workpiece in the radial direction when the number of rotations of the workpiece is changed.
Figure 9 is a diagram showing the variation in the average value of the detected values up to the machined surface of the workpiece in the radial direction when the radial dimension of the workpiece is repeatedly measured.

### DESCRIPTION OF EMBODIMENTS

A turning tool (cutting tool) 1 according to one embodiment of the present invention will be described below with reference to the drawings. In the drawings, the scale and number of components may differ from the actual structure in order to make each component easier to understand.

### <Turning cutting tool system>

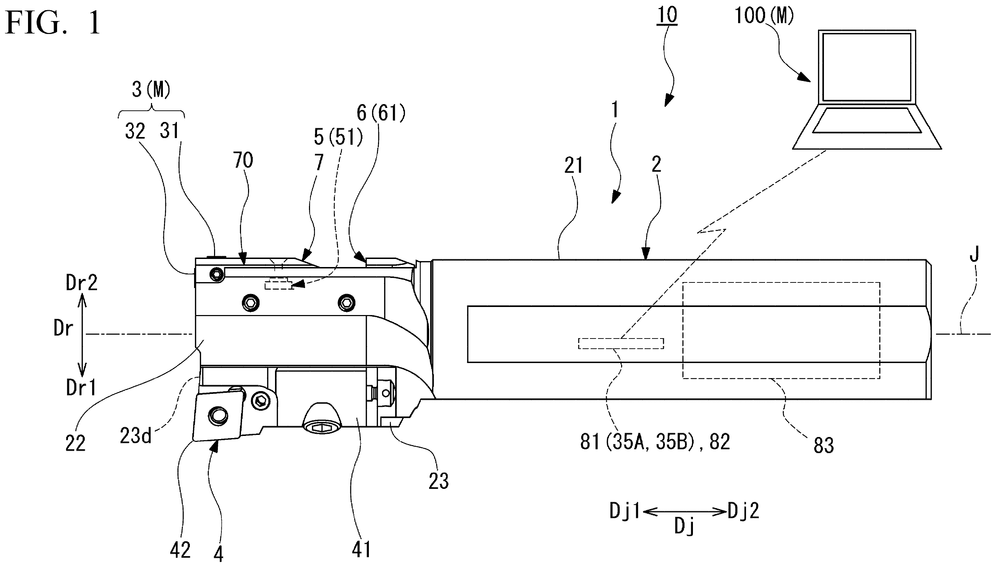

Figure 1 is a diagram showing a turning cutting tool system (cutting tool system) 10 according to one embodiment of the present invention.

As shown in Figure 1, the turning cutting tool system 10 includes a turning tool 1 and a measurement device main body 100.

The turning tool 1 of this embodiment performs turning, such as boring, on a workpiece such as a metal material that is rotated around a spindle of a machine tool (not shown). The turning tool 1 of this embodiment is made of metal and includes a tool main body 2, a cutting insert 4, and a head unit 7.

The tool main body 2 extends in an axial direction Dj along the cutting tool axis J. The tool main body 2 has a cylindrical shank section portion 21 centered on the cutting tool axis J, and a head section 22 provided on one side Dj1 of the shank section portion 21 in the axial direction Dj of the tool main body 2.

The head section 22 has a protrusion 23 that protrudes from the outer peripheral surface of the shank section portion 21 outward in a radial direction Dr of the tool main body 2 that intersects with the axial direction Dj. A base 23d is provided on the protrusion 23. A cartridge 41 is attached to the base 23d. The cartridge 41 holds the cutting insert 4. The base 23d and the cutting insert 4 attached to the cartridge 41 are arranged on a first side Dr1 in the radial direction Dr with respect to the cutting tool axis J in the tool main body 2. The cutting insert 4 may also be attached directly to the base 23d.

The cutting insert 4 has a diamond shape when viewed in the thickness direction. The cutting insert 4 has a pair of diamond-shaped main surfaces in a plan view facing the thickness direction and side surfaces connecting the pair of main surfaces. A cutting edge 42 is provided on the ridge between the main surfaces and the side surfaces of the cutting insert 4. The cutting edge 42 is provided at the tip portion of one side Dj1 in the axial direction Dj of the tool main body 2. A portion of the cutting edge 42 protrudes from the tool main body 2 to the one side Dj1 in the axial direction Dj. Furthermore, the cutting edge 42 protrudes outward in the radial direction Dr of the tool main body 2. Therefore, a portion of the cutting edge 42 is located at the forefront of the one side Dj1 in the axial direction Dj of the tool main body 2 and at the outermost end in the radial direction Dr.

According to this embodiment, the cutting insert 4 is fixed to the tool main body 2 via the cartridge 41. Therefore, by replacing the cartridge 41, cutting inserts 4 of various shapes can be fixed to the tool main body 2, thereby increasing the versatility of the tool main body 2.

The head unit 7 is provided in the head section 22. The head unit 7 includes a holder member 70, a sensor 3, an imaging device 5, and an illumination device 6. The head unit 7 is disposed in the tool main body 2 on a second side Dr2 in the radial direction Dr with respect to the cutting tool axis J. That is, the head unit 7 is disposed on the opposite side of the cutting tool axis J from the base 23d and the cutting insert 4 attached to the base 23d in the radial direction Dr of the tool main body 2. The holder member 70 is detachably attached to the tool main body 2.

The sensor 3 includes a first distance sensor 31 and a second distance sensor 32. The first distance sensor 31 and the second distance sensor 32 are held by a holder member 70. The holder member 70 is attached to the head section 22. **In** this embodiment, the first distance sensor 31 and the second distance sensor 32 measure the distance to the machined surface machined using the cutting insert 4. The sensor 3, together with the measurement device main body 100, constitutes a dimension measurement device M.

The first distance sensor 31 is arranged facing outward in the radial direction Dr from the outer peripheral surface of the tool main body 2. The first distance sensor 31 measures the distance to a measurement object arranged outside the radial direction Dr of the tool main body 2. That is, the measurement direction of the first distance sensor 31 is the radial direction Dr. The first distance sensor 31 measures the distance to a machined surface machined by the cutting insert 4 facing inward in the radial direction Dr.

The second distance sensor 32 is disposed facing one side Dj1 in the axial direction Dj from the head section 22 of the tool main body 2. The second distance sensor 32 measures the distance to a measurement object disposed on the one side Dj1 in the axial direction Dj of the tool main body 2. That is, the measurement direction of the second distance sensor 32 is the axial direction Dj. The second distance sensor 32 measures the distance to a machined surface machined by the cutting insert 4 and facing the other side Dj2 in the axial direction Dj.

The first distance sensor 31 and the second distance sensor 32 are eddy current sensors. Eddy current sensors tend to maintain stable measurement accuracy against disturbances such as those in the surrounding environment. Therefore, eddy current sensors are more suitable for distance measurement in a disturbance-prone environment after cutting machining than optical distance sensors, regardless of whether wet machining or dry machining is selected.

The first distance sensor 31 and the second distance sensor 32 generate a high-frequency magnetic field by passing a high-frequency current therethrough. This causes an eddy current to flow on the surface (machined surface) of the measurement object, which is a conductor, and changes the impedance of the coils inside the first distance sensor 31 and the second distance sensor 32. The first distance sensor 31 and the second distance sensor 32 detect the distance to the measurement object from this change in impedance. The first distance sensor 31 and the second distance sensor 32 output a voltage (unit: V) indicating the change in impedance as their output value.

The first distance sensor 31 and the second distance sensor 32 are used to measure the machined surface after the turning tool 1 forms it. Because the first distance sensor 31 and the second distance sensor 32 are provided on the tool main body 2, the machined surface after cutting can be measured without first separating the turning tool 1 from the workpiece. This shortens the time required to measure the machined surface during turning. Furthermore, the first distance sensor 31 can be used to measure the distance to the machined surface facing inward in the radial direction Dr machined by the cutting insert 4, and the second distance sensor 32 can be used to measure the distance to the machined surface facing the other side Dj2 in the axial direction Dj machined by the cutting insert 4. In other words, during dimensional measurement, dimensional measurements of surfaces facing in different directions can be performed without changing the orientation of the workpiece, further shortening the time required for the measurement step. The first distance sensor 31 can also be used to measure the outer diameter, inner diameter, and roundness of the surface machined by the cutting insert 4. Furthermore, the second distance sensor 32 can measure the axial positions of the step portion and the hole bottom portion machined by the cutting insert 4.

The imaging device 5 is provided in the head unit 7 of the tool main body 2. The imaging device 5 is arranged on the other side Dj2 in the axial direction Dj with respect to the sensor 3. The imaging device 5 includes a camera 51. The camera 51 is, for example, a waterproof CMOS image sensor or a CCD image sensor. The camera 51 is fixed to the holder member 70. The camera 51 is arranged so as to be able to photograph the outside of the tool main body 2 in the radial direction Dr. The camera 51 photographs the machined surface facing inward in the radial direction Dr, that is, the so-called inner diameter surface, of the workpiece machined by the cutting insert 4.

The lighting device 6 is provided in the head unit 7 of the tool main body 2. The lighting device 6 is disposed on the other side Dj2 in the axial direction Dj of the camera 51 of the imaging device 5. The lighting device 6 includes a light source 61 that illuminates the machined surface photographed by the camera 51. The light source 61 is, for example, a light-emitting element such as an LED.

The turning tool 1 includes a cutting tool control part 81, a communication part 82, and a power supply module 83. In this embodiment, the cutting tool control part 81 is, in terms of hardware, a control board housed inside the tool main body 2, for example. The cutting tool control part 81 is a computer including a CPU (Central Processing Unit), a memory, or the like.. Control programs for controlling the operations of the first distance sensor 31, the second distance sensor 32, the camera 51, and the light source 61 are stored in advance in the memory (not shown) of the cutting tool control part 81.

The cutting tool control part 81 outputs control signals to the first distance sensor 31, the second distance sensor 32, the camera 51, and the light source 61 to control the operation of the first distance sensor 31, the second distance sensor 32, the camera 51, and the light source 61 based on instructions from the measurement device main body 100 described later.

The cutting tool control part 81 includes signal conversion parts 35A and 35B that convert analog output signals indicating voltage values output in accordance with the detection results (distances) of the first distance sensor 31 and the second distance sensor 32 into digital signals. The signal conversion parts 35A and 35B are composed of converters. The signal conversion part 35A outputs, for predetermined time intervals (sampling intervals), the average value of the output signal within the time interval from the first distance sensor 31 within the time interval (sampling interval) as a detected value. The signal conversion part 35B outputs, at predetermined time intervals, the average value of the output signal from the second distance sensor 32 within the time interval (sampling interval) as a detected value.

The communication part 82 is capable of wireless communication with the outside. In terms of hardware, the communication part 82 is a communication module mounted on a control board constituting the cutting tool control part 81. The communication part 82 is capable of wireless communication with the measurement device main body 100 via a wireless communication network such as a wireless LAN, Wi-Fi (registered trademark), or BLUETOOTH (registered trademark). The communication part 82 receives control signals output from the measurement device main body 100 for controlling the operation of the first distance sensor 31, the second distance sensor 32, the camera 51, and the light source 61. The communication part 82 transmits detected values from the signal conversion parts 35A and 35B, image data captured by the camera 51, and the like to the measurement device main body 100. The communication part 82 also transmits the remaining charge (battery voltage) of the power supply module 83 to the measurement device main body 100.

The power supply module 83 supplies power to the cutting tool control part 81, the first distance sensor 31, the second distance sensor 32, the camera 51, and the light source 61. The power supply module 83 is a primary battery (battery) such as a manganese dry battery or an alkaline dry battery. The power supply module 83 may be configured to charge a secondary battery such as a lithium-ion battery with electricity from a power generation element such as a piezoelectric vibration sensor that generates electricity using vibrations generated in the tool main body 2 during cutting, or may be configured to charge such a secondary battery with electricity supplied contactingly or contactlessly from an external power source.

### <Measurement device main body>

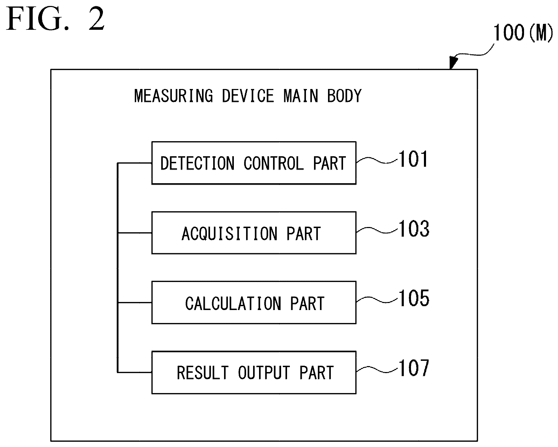

Figure 2 is a functional block diagram of the measurement device main body 100.

The measurement device main body 100, which constitutes a part of the measurement device M, is a computer device such as a personal computer, a tablet terminal, or a smartphone. In terms of hardware, the measurement device main body 100 includes a CPU (Central Processing Unit), memory, a storage device, or the like.. The measurement device main body 100 is used when machining a workpiece using a turning tool 1. The measurement device main body 100 of this embodiment is configured to measure a diameter of a workpiece rotated relative to the turning tool 1 about a central axis O.

When a workpiece is machined by the turning tool 1 based on a machining program stored in the machine tool, the measurement device main body 100 controls the operation of the first distance sensor 31, the second distance sensor 32, the camera 51, and the light source 61 of the turning tool 1 based on commands from the machine tool. Based on commands from the machine tool, the measurement device main body 100 measures the dimensions of the workpiece using the first distance sensor 31 and the second distance sensor 32, and photographs the machined surface using the camera 51. Note that the following description of the measurement device main body 100 will focus on measuring the dimension of the workpiece in the radial direction using the first distance sensor 31, and will omit descriptions of measuring the dimension of the workpiece in the axial direction using the second distance sensor 32 and photographing the machined surface using the camera 51 as appropriate.

The measurement device main body 100 includes a detection control part 101, an acquisition part 103, a calculation part 105, and a result output part 107, which are implemented by the CPU executing a program stored in the device in advance. The detection control part 101 controls the operation of a machine tool (not shown) and the turning tool 1 when measuring the dimensions of the machined workpiece after the tool main body 2 has finished machining the workpiece . When measuring the dimensions of the workpiece, the detection control part 101 rotates the workpiece held by the machine tool around the central axis O of the workpiece. While rotating the workpiece around the central axis O of the workpiece, the detection control part 101 causes the sensor 3 to detect the distance to the workpiece.

The detection control part 101 rotates the workpiece at a predetermined rotational speed, for example, between 150 min⁻¹ and 1500 min⁻¹. When measuring the dimensions of the workpiece, the rotational speed at which the workpiece is rotated is more preferably between 250 min⁻¹ and 1200 min⁻¹. When measuring the dimensions of the workpiece, the rotational speed at which the workpiece is rotated is particularly preferably between 300 min⁻¹ and 600 min⁻¹. When measuring the dimensions of the workpiece, the influence of the electrical runout phenomenon of the workpiece can be suppressed by detecting the distance to the machined surface of the workpiece using the first distance sensor 31 while rotating the workpiece at a rotational speed within the above range. When measuring the dimensions of the workpiece, if the workpiece is rotated at a rotational speed below the lower limit of the above range, the influence of the electrical runout phenomenon of the workpiece may not be sufficiently suppressed. Furthermore, when measuring the dimensions of a workpiece, if the workpiece is rotated at a speed higher than the upper limit of the above range, the mechanical vibration of the machine tool will increase, which may have an adverse effect on the measurement of the dimensions of the workpiece.

The acquisition part 103 is capable of wireless communication with the communication part 82 via wireless LAN, Wi-Fi (registered trademark), BLUETOOTH (registered trademark), or the like. The acquisition part 103 acquires detected values output from the signal conversion parts 35A and 35B of the sensor 3. The acquisition part 103 acquires detected values output from the sensor 3 within a predetermined time period. The first distance sensor 31 and the second distance sensor 32 of the sensor 3 output voltages (analog output signals) corresponding to the detection results (distances) of the distances to the machining surface of the workpiece. The analog output signals output from the first distance sensor 31 and the second distance sensor 32 are converted into digital signals by the signal conversion parts 35A and 35B. The signal conversion parts 35A and 35B output digital signals obtained by converting the analog output signals output from the first distance sensor 31 and the second distance sensor 32 at predetermined time intervals. The signal conversion parts 35A and 35B output, at predetermined time intervals, the average value of the analog output signals from each of the first distance sensor 31 and the second distance sensor 32 within that time interval as the detected value. In other words, the acquisition part 103 acquires, as the detected value, the average value of the analog output signals from each of the first distance sensor 31 and the second distance sensor 32 of the sensor 3 within the predetermined time interval. Here, the time interval can be set to, for example, 0.125 seconds.

The acquisition part 103 acquires the detected values output from the signal conversion part 35A of the sensor 3 for a predetermined time period set so that the workpiece rotated around the central axis O by the machine tool rotates, for example, 5 to 50 times. The predetermined time period for the acquisition part 103 to acquire the detected values output from the sensor 3 varies depending on the rotation speed (rotation speed [min⁻¹]) of the workpiece. It is more preferable that the acquisition part 103 acquires the detected values output from the signal conversion part 35A for a predetermined time period set so that the workpiece rotates, for example, 10 to 20 times. If the rotation speed of the workpiece is less than the lower limit of the above range, the number of detected values from the sensor 3 that can be acquired by the acquisition part 103 will be reduced, and the effects of electrical runout may not be sufficiently suppressed. Furthermore, if the rotation speed of the workpiece is greater than the upper limit of the above range, the time required for the acquisition part 103 to acquire multiple detected values will be longer.

The calculation part 105 calculates the average value of the plurality of detected values acquired by the acquisition part 103. The calculation part 105 calculates the average value of the plurality of detected values acquired by the acquisition part 103 during a predetermined time period.

The result output part 107 outputs the measurement results of the workpiece based on the average value of the detected values calculated by the calculation part 105. The result output part 107 calculates the radial dimension of the workpiece from the calculated distance to the machined surface of the workpiece. The result output part 107 displays information related to the calculated dimensional measurement results of the workpiece on a display device such as a monitor. The result output part 107 may determine whether the machining by the machine tool is good or bad based on the dimensional measurement results of the workpiece, and display the determination results, or the like..

### <Dimension measurement method>

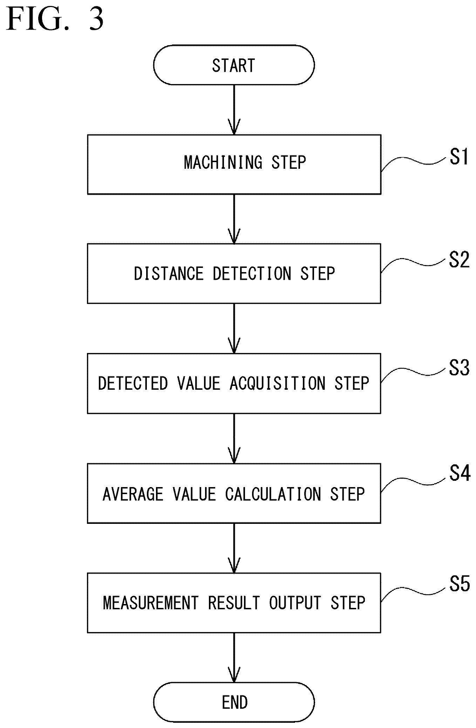

Next, a description will be given of a dimension measurement method in the above-described turning cutting tool system 10. Figure 3 is a flowchart showing the flow of the dimension measurement method according to one embodiment of the present invention.

As shown in Figure 3, the dimension measurement method in the turning cutting tool system 10 includes a machining step S1, a distance detection step S2, a detected value acquisition step S3, an average value calculation step S4, and a measurement result output step S5.

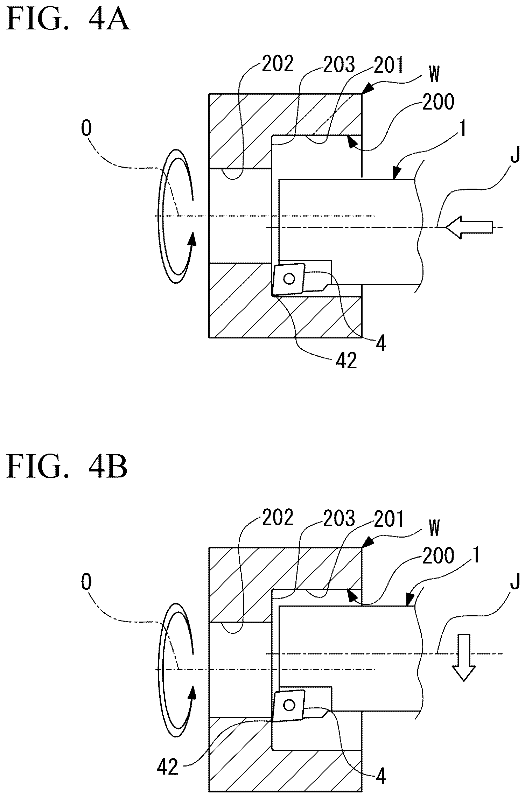

Figures 4A and 4B are diagrams illustrating the machining steps of one embodiment of the present invention.

As shown in Figures 4A and 4B , the workpiece W of this embodiment has a stepped through hole 200. The through hole 200 has a stepped surface 203, a large diameter portion 201 on one axial side of the stepped surface 203, and a small diameter portion 202 on the other axial side of the stepped surface 203. In this embodiment, the turning tool 1 is used to perform finishing (so-called internal diameter machining) on the large diameter portion 201 and the stepped surface 203 of the through hole 200.

In the machining step S1, as shown in Figure 4A, the inner peripheral surface of the large diameter portion 201 is machined. In this step, the cutting edge 42 is brought into contact with the inner peripheral surface of the large diameter portion 201 of the workpiece W and moved in the axial direction while the workpiece W is rotated around the main axis O. Furthermore, in the machining step S1, as shown in Figure 4B, the step surface 203 is machined. In this step, the cutting edge 42 is moved in the radial direction while the workpiece W continues to rotate around the main axis O, to machine the step surface 203.

After the machining step S1, a distance detection step S2 is carried out.

In the distance detection step S2, the first distance sensor 31 is used to obtain detected values corresponding to the respective distances from the workpiece W.

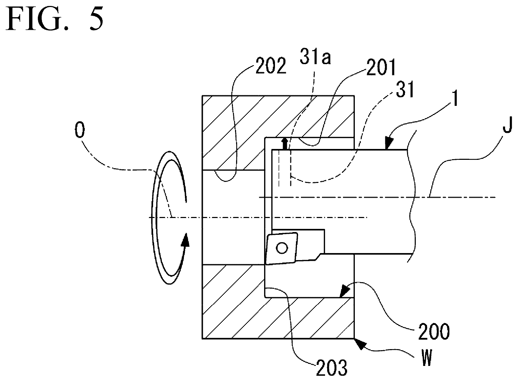

Figure 5 shows a state in which the first distance sensor 31 detects the distance in the radial direction of the workpiece in the distance detection step S2.

In the distance detection step S2, first, the tip surface 31a of the first distance sensor 31 is made to face the inner peripheral surface (machined surface) of the large diameter portion 201. Next, the workpiece held by the machine tool is rotated around the central axis (main axis) O of the workpiece W. The detection control part 101 detects the distance to the inner peripheral surface of the large diameter portion 201 of the workpiece W with the first distance sensor 31 while rotating the workpiece W around the central axis O of the workpiece W. At this time, the detection control part 101 rotates the workpiece W at a predetermined rotational speed of, for example, not less than 150 min⁻¹ and not more than 1500 min⁻¹.

The first distance sensor 31 outputs an analog output signal (voltage value) corresponding to the distance to the inner peripheral surface of the large diameter portion 201 of the workpiece W. The analog output signal output from the first distance sensor 31 is converted into a digital signal by the signal conversion part 35A. The signal conversion part 35A outputs, at each predetermined time interval, the average value of the analog output signal from the first distance sensor 31 within that time interval as a detected value.

After the distance detection step S2, a detected value acquisition step S3 is performed.

In the detected value acquisition step S3, the acquisition part 103 acquires the detected values output from the signal conversion part 35A. The acquisition part 103 acquires the detected values output at time intervals within a predetermined time period. The acquisition part 103 acquires the detected values output from the signal conversion part 35A for a predetermined time period so that the workpiece W makes, for example, 10 rotations.

After the detected value acquisition step S3, an average value calculation step S4 is performed.

In an average value calculation step S4, the calculation part 105 calculates the average value of the multiple detected values acquired in step S3. The calculation part 105 calculates the average value of the radial distances from the first distance sensor 31 to the machined surface of the workpiece W at multiple locations around the central axis O of the workpiece W.

After the average value calculation step S4, a measurement result output step S5 is carried out.

In a measurement result output step S5, the result output part 107 outputs the measurement result of the workpiece W based on the average value of the detected values calculated in step S4. The result output part 107 calculates the radial dimension of the workpiece W from the calculated distance to the machined surface of the workpiece W. The result output part 107 may display information related to the calculated measurement results of the dimensions of the workpiece W on a display device such as a monitor.

In addition, steps S2 to S5 as described above may be performed in the same manner at multiple positions on the workpiece W that have the same inner diameter by moving the first distance sensor 31 in the direction of the center axis O of the workpiece W.

### [Effects of this embodiment]

According to the dimension measurement device M, turning cutting tool system 10, and dimension measuring method of the present embodiment described above, by acquiring multiple detected values that are average values of the outputs of the first distance sensor 31 while rotating the workpiece and then averaging the multiple acquired detected values, it is possible to efficiently measure the dimension of the workpiece in the radial direction while suppressing the influence of the electrical runout phenomenon. As a result, it is possible to efficiently and accurately measure the dimension of the workpiece in the radial direction while rotating the workpiece.

In this embodiment, the workpiece is rotated at a predetermined rotational speed of 150 min⁻¹ or more and 1500 min⁻¹ or less while the radial dimension of the workpiece is measured. This allows the number of detected values to be used for calculating the average value to be increased in a short time. Therefore, the radial dimension of the workpiece can be measured more efficiently and with higher accuracy.

In this embodiment, the workpiece is rotated five or more revolutions within a predetermined time period to acquire detected values. This increases the number of detected values to be used for calculating the average value. This allows for more accurate radial dimension measurement of the workpiece .

In this embodiment, the sensor 3 is attached to the turning tool 1. This allows the sensor 3 attached to the turning tool 1 to efficiently measure the radial dimension of the workpiece machined by the turning tool 1.

In this embodiment, the direction in which the dimension measurement device M and the turning cutting tool system machine the workpiece and perform dimension measurement is the radial direction of the central axis O. However, the direction in which the dimension measurement device M and the turning cutting tool system machine the workpiece and perform dimension measurement may be the axial direction of the central axis O. In this case, the turning tool 1 cuts the end face of the workpiece W that rotates around the central axis O, the end face facing the axial direction. In addition, the sensor 3 detects the distance to the end face of the workpiece W that faces the axial direction.

In this embodiment, the signal converter 35A outputs the average value of the output signal within each time interval of the first distance sensor 31 at each predetermined time interval as the detected value. However, the output signal of the first distance sensor 31 may be output as the detected value without averaging. That is, the signal converter 35A may output the detected value based on the output signal of the first distance sensor 31. In this case, a dimension measurement device that achieves the same effect by averaging the detected value in the calculation part 105 can be configured. Even in this case, the signal converter 35A outputs the detected value for each predetermined time interval. Here, the time interval at which the signal converter 35A outputs the detected value is the sampling period of the converter of the signal converter 35A. That is, the signal converter 35A either outputs the output signal of the distance sensor as the detected value or averages the output signal and outputs it as the detected value at each sampling period of the converter.

### (Modification of the embodiment)

In the above embodiment, when measuring the radial dimension of the workpiece using the dimension measurement device M, calibration may be performed according to the material of the workpiece, or the like.. In this case, the distance detection error of the first distance sensor 31 due to the influence of the material of the workpiece, or the like.. may be determined in advance by experiment, or the like.., and the distance detection result of the first distance sensor 31 may be calibrated based on the determined result.

In addition, in the above embodiment, the sensor 3 is attached to the turning tool 1, but this is not limiting. The sensor 3 may be provided independently from the turning tool 1. In this case, the sensor 3 may be provided on the machine tool side, for example.

### [Other configurations included in the present invention]

The present invention is not limited to the above-described embodiments, and the configurations (elements) described in the above-described embodiments, modifications, and notes may be combined within the scope of the present invention, and additions, omissions, substitutions, and other modifications of the configurations are possible. Furthermore, the present invention is not limited to the above-described embodiments, but is limited only by the claims.

For example, in the above-described embodiment, a turning tool that rotates a workpiece to perform cutting has been described as an example of a cutting tool included in the cutting tool system. However, the turning tool is not limited to the turning tool of this embodiment as long as it presses a cutting insert against the workpiece to perform cutting. The cutting tool may also be a rotating tool that rotates itself, such as a drill, an end mill, or a milling machine.

### (Example)

The configuration described in the above embodiment was verified, and the results are shown below.

First, we confirmed the occurrence of electrical runout.

For this, after machining the workpiece, the inner diameter was measured with a dial gauge, and it was confirmed in advance that the variation in diameter at multiple positions in the circumferential direction (mechanical runout) was within 0.5 µm.

Thereafter, the workpiece was rotated around the central axis O by 5° at a time, and at each phase, the first distance sensor 31 detected the distance to the inner peripheral surface of the large diameter portion 201 of the workpiece. At this time, when the first distance sensor 31 detected the distance, the workpiece was not rotated but was fixed at each phase.

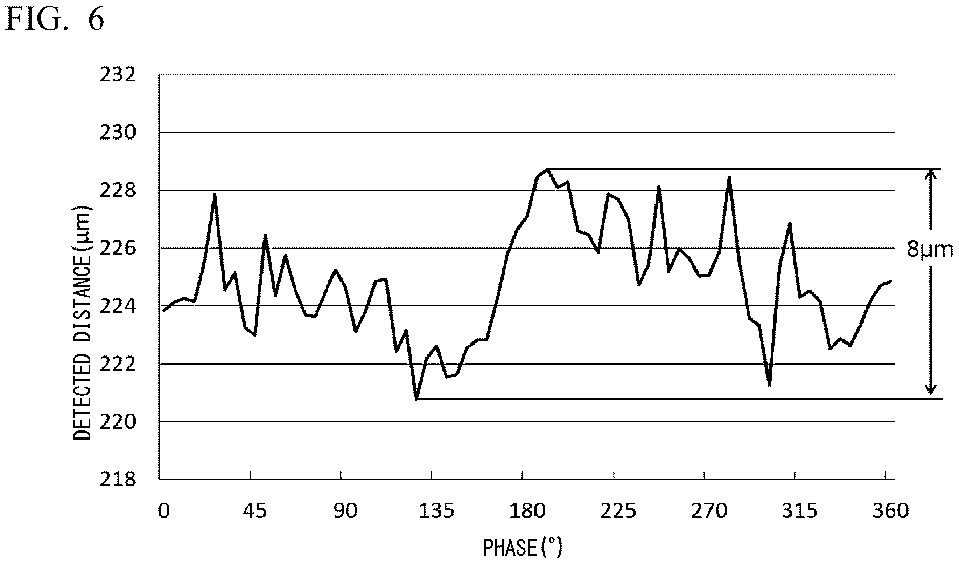

Figure 6 is a diagram showing variations in the detected distance to the machined surface of the workpiece in the radial direction due to the electrical runout phenomenon.

As a result, it was confirmed that the detected distance varied depending on the phase of the workpiece, with a difference of 8 µm between the minimum and maximum values, as shown in Figure 6. Since the variation was greater than the measurement results using a dial gauge, it can be inferred that this was due to the electrical runout phenomenon.

Next, while the workpiece was rotated around the central axis O by the machine tool, the distance to the inner peripheral surface of the large diameter portion 201 of the workpiece was detected by the first distance sensor 31. The workpiece was rotated at four rotational speeds of 60 min⁻¹, 300 min⁻¹, 600 min⁻¹ and 1200 min⁻¹, and distance detection was performed by the first distance sensor 31 at time intervals of 0.125 seconds.

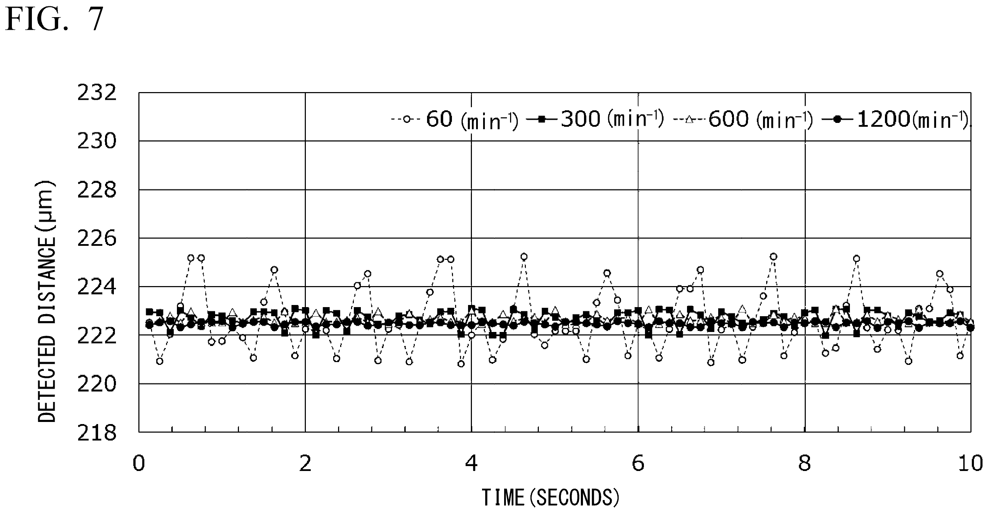

Figure 7 is a diagram showing variations in the detected distance to the machined surface of the workpiece in the radial direction when the rotation speed of the workpiece is changed.

As a result, as shown in Figure 7, when the workpiece was rotated at a rotational speed of 60 min⁻¹, there was variation in the detected distance, but when the workpiece was rotated at rotational speeds of 300 min⁻¹, 600 min⁻¹, and 1200 min⁻¹, it was confirmed that the variation in the detected distance was equivalent to the measurement results using a dial gauge.

Next, the workpiece was rotated around the central axis O by the machine tool at 300 min⁻¹, and the number of rotations of the workpiece when the first distance sensor 31 detected the distance to the inner peripheral surface of the workpiece was set to three values: 2.5 rotations, 5 rotations, and 10 rotations. The average value of the detected values output from the signal conversion part 35A was calculated while the number of rotations of the workpiece reached 2.5 rotations, 5 rotations, and 10 rotations. Furthermore, the same distance detection and calculation of the average detected value were repeated 10 times for each of the rotation numbers of 2.5 rotations, 5 rotations, and 10 rotations.

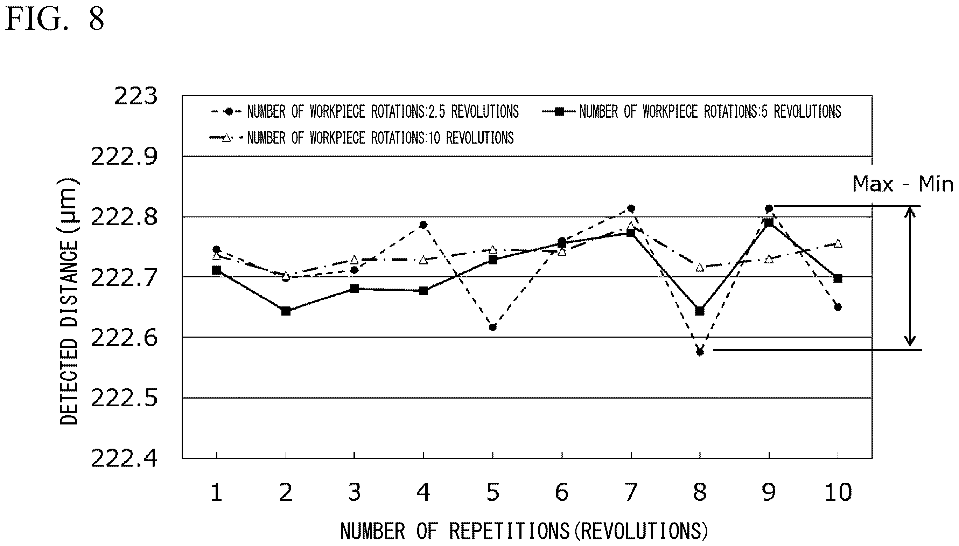

Figure 8 is a diagram showing the average values of the detected values up to the machined surface of the workpiece in the radial direction when the number of rotations of the workpiece is changed.

As a result, as shown in Figure 8, it was confirmed that when the first distance sensor 31 detects the distance to the inner surface of the workpiece, the greater the number of rotations of the workpiece, the smaller the variation in the average detected value.

Furthermore, the workpiece was rotated around the central axis O by the machine tool at four rotational speeds of 60 min⁻¹, 300 min⁻¹, 600 min⁻¹ and 1200 min⁻¹, and the detection of the distance and the calculation of the average of the detected values were repeated in the same manner as above.

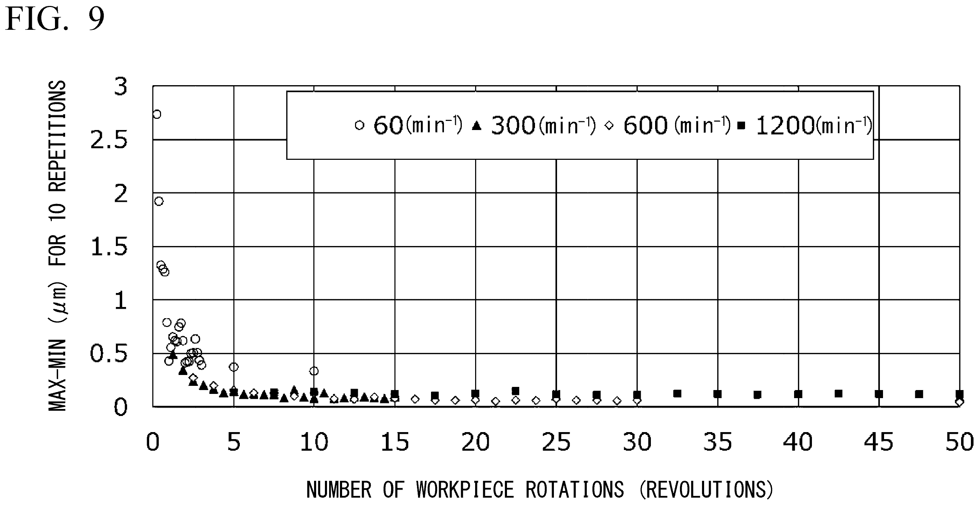

Figure 9 is a diagram showing the variation (maximum-minimum) of the average value of the detected value up to the machined surface of the workpiece in the radial direction when the radial dimension of the workpiece is repeatedly measured 10 times.

As a result, as shown in Figure 9, when the rotation speed of the workpiece is 300 min⁻¹, 600 min⁻¹, and 1200 min⁻¹, it was confirmed that the variation in the detected values becomes small when the number of rotations of the workpiece is 5 or more when the first distance sensor 31 detects the distance to the inner peripheral surface of the workpiece. In contrast, when the rotation speed of the workpiece is 60 min⁻¹, the variation in the detected values is large compared to the cases of 300 min⁻¹, 600 min⁻¹, and 1200 min⁻¹, even if the number of rotations of the workpiece increases.

The present invention may be combined with the various configurations described in the above-described embodiments and modifications, and may also include additions, omissions, substitutions, and other modifications of the configurations, without departing from the spirit of the present invention. Furthermore, the present invention is not limited to the above-described embodiments, but is limited only by the claims.

### INDUSTRIAL APPLICABILITY

The dimensions of the workpiece in one direction can be measured efficiently and with high accuracy.

### REFERENCE SIGNS LIST

1 Turning tools (cutting tools)
2 Tool main body
3 Sensor
4 Cutting insert
5 Imaging device
6 Lighting device
7 Head unit
10 Turning cutting tool system (cutting tool system)
21 Shank section
22 Head section
23 Projection
23d Pedestal
31 First distance sensor
31a Tip surface
32 Second distance sensor
35A, 35B signal conversion part
41 Cartridge
42 Cutting edge
51 Camera
61 Light source
70 holder member
81 Cutting tool control part
82 Communication part
83 Power supply module
100 Measurement device main body
101 Detection control part
103 Acquisition part
105 Calculation part
107 Result output part
200 Through hole
201 Large diameter section
202 Small diameter section
203 Step surface
Dj Axial direction
Dj1 One side
Dj2 Other side
Dr Radial direction
Dr1 first side
Dr2 second side
J Cutting tool axis
M Dimension measurement device
O Center axis, main axis
S1 Machining step
S2 Distance detection step
S3 Detected value acquisition step
S4 Average value calculation step
S5 Measurement result output step
W Workpiece

## Claims

1. A dimension measurement device configured to measure a dimension in one direction of a workpiece machined by rotating the workpiece relative to a cutting tool about a central axis,
the dimension measurement device comprising:
a sensor for detecting a distance to a machined surface of the workpiece in the one direction; and
a measurement device main body configured to measure the dimension of the workpiece in the one direction based on the distance detected by the sensor, wherein
the sensor comprises:
an eddy current distance sensor; and
a signal conversion part configured to output detected values based on an output signal of the distance sensor for each predetermined time interval, and wherein
the measurement device main body comprises:
a detection control part configured to cause the sensor to detect a distance to the workpiece while rotating the workpiece around the central axis;
an acquisition part configured to acquire a plurality of detected values output from the sensor for each predetermined time interval within a predetermined time period;
a calculation part that calculates an average value of the plurality of detected values acquired by the acquisition part; and
a result output part configured to output a measurement result of the workpiece based on the average value of the detected values calculated by the calculation part.

2. The dimension measurement device according to Claim 1, wherein the signal conversion part is configured to output an average value of the output signal of the distance sensor over each predetermined time interval.

3. The dimension measurement device according to Claim 1, wherein the detection control part is configured to rotate the workpiece at a predetermined rotational speed of 150 min⁻¹ or more and 1500 min⁻¹ or less.

4. The dimension measurement device according to any one of Claims 1 to 3, wherein the acquisition part is configured to acquire the detected values while rotating the workpiece five or more revolutions within the predetermined time period.

5. A cutting tool system comprising:
the cutting tool including a tool main body extending along a cutting tool axis and having a mounting seat at a distal end thereof, and a cutting insert removably attached to the mounting seat; and
the dimension measurement device according to any one of Claims 1 to 3.

6. The cutting tool system according to Claim 5, wherein the sensor is attached to the cutting tool.

7. A dimension measuring method for measuring a dimension in one direction of a workpiece machined by rotating the workpiece relative to a cutting tool about a central axis, the method comprising:
detecting a distance to the workpiece with an eddy current distance sensor while rotating the workpiece around the central axis, and outputting, as a detected value, an average value of the output signal of the distance sensor over each predetermined time interval;
acquiring a plurality of the detected values output for each predetermined time interval within a predetermined time period;
calculating an average value of the acquired plurality of detected values; and
outputting a measurement result of the workpiece based on the calculated average value of the detected values.
